# EUROPEAN PATENT APPLICATION

(11) **EP 0 819 734 A1**
(43) Date of publication of application: **21.01.1998**
(21) Application number: 97305298.8
(22) Date of filing: 16.07.1997
(51) Int. Cl.: C08L 77/00, C08K 7/04

(54) **Polyamide resin composition**

(30) Priority: 19.07.1996 JP 190275/96; 10.06.1997 JP 152001/97
(71) Applicant: UBE INDUSTRIES, LTD., Ube-shi, Yamaguchi-ken 755 (JP)
(72) Inventor: Ueno, Eiji, c/o Ube Industries, Ltd., Ube-shi, Yamaguchi (JP); Urata, Yoshihiro, c/o Ube Industries, Ltd., Ube-shi, Yamaguchi (JP)
(74) Representative: Hucker, Charlotte Jane

(57) **Abstract**

A polyamide resin composition is described, which comprises:
(1) 100 parts by weight of a polyamide resin;
(2) from 5 to 50 parts by weight of a fluororesin;
(3) from 5 to 50 parts by weight of a carbon fiber; and
(4) from 5 to 50 parts by weight of a fibrous Xonotlite.

## Description

### FIELD OF THE INVENTION

This invention relates to a polyamide resin composition which has a high slidability and an improved dimensional stability while sustaining various inherent characteristics of polyamide resins such as mechanical characteristics and oil resistance.

### BACKGROUND OF THE INVENTION

Because of being excellent in physical and chemical properties such as mechanical characteristics, electrical characteristics and oil resistance, polyamide resins have been widely employed as engineering plastics in automobiles, electrical appliances, electronic equipments, etc. In particular, polyamide resins are frequently employed in the automotive industry owing to the high oil resistance.

Although polyamide resins are excellent in slidability too, improved mechanical characteristics (enhanced slidability, elevated dimensional stability, elevated rigidity, etc.) are further needed when they are to be used in hydraulic equipment parts such as pistons, cylinders or drive-shaft washers.

Known methods for satisfying these requirements comprise adding reinforcing fillers typified by glass fiber to polyamide resins.

For example, JP-A-58-38752 discloses a polyamide resin composition to be used in hydraulic equipments which is prepared by adding fibrous reinforcing agents (glass fiber, etc.), dimethyl polysiloxane and activated carbon to crystalline nylon 66 resin (The term "JP-A" as used herein means an "unexamined published Japanese patent application").

The above-mentioned composition is excellent in slidability to a rubber sealing material in hydraulic equipments. When it is employed in a piston and a cylinder of a hydraulic equipment, however, these parts are damaged by each other due to the glass fiber contained therein and thus worsen the performance of the hydraulic equipment.

JP-A-8-165376 proposes a resin composition comprising a thermoplastic resin and a fibrous Xonotlite. In this publication, citation is made of fluororesins, in addition to polyamide resins, as examples of the thermoplastic resin. Further, glass fiber, carbon fiber, etc. are cited as examples of reinforcing fibers usable together with the fibrous Xonotlite. With respect to the effects, it is described in this publication that the resin composition is excellent in mechanical characteristics and heat resistance and has a low dimensional anisotropy.

However, this publication states nothing about the slidability of the resin composition. Although it provides examples wherein the fibrous Xonotlite is used together with glass fiber, no example of the combined use of the fibrous Xonotlite with carbon fiber is given therein.

### SUMMARY OF THE INVENTION

An object of the present invention is to provide a polyamide resin composition which has good slidability and a high dimensional stability while sustaining the inherent oil resistance, heat stability, mechanical characteristics and molding properties of polyamide resins and is widely usable as hydraulic equipment parts in the field of automobiles and other hydraulic equipments.

Accordingly, the present invention relates to a polyamide resin composition which comprises:
(1) 100 parts by weight of a polyamide resin;
(2) from 5 to 50 parts by weight of a fluororesin;
(3) from 5 to 50 parts by weight of a carbon fiber; and
(4) from 5 to 50 parts by weight of a fibrous Xonotlite.

### DETAILED DESCRIPTION OF THE INVENTION

Now, the present invention will be described in detail.

The polyamide resin to be used as the component (1) in the present invention involves resins having amide bond in general. Particular examples of the polyamide resin include aliphatic polyamides such as nylon 6, nylon 66, nylon 11, nylon 12, nylon 46 and nylon 610, semiaromatic polyamides such as polyhexamethylene telephthalamide and polyhexamethylene isophthalamide and copolymers thereof. Either one of these polyamide resins or a combination thereof may be used in the present invention.

Among all, it is preferable to use nylon 66, semiaromatic polyamides and copolymers thereof, since these materials are excellent in oil resistance and heat resistance.

The relative viscosity ηᵣ (measured in accordance with JIS K6810) of the polyamide resin ranges generally from 2 to 4, preferably from 2.2 to 3.1. When the relative viscosity is excessively low, the mechanical strength or thermal properties of the polyamide resin are deteriorated. When the relative viscosity is excessively high, on the other hand, the moldability thereof is worsened.

Examples of the fluororesin to be used as the component (2) in the present invention include polytetrafluoroethylene, fluorinated ethylene/propylene copolymers, ethylene tetrafluoride/perfluoroalkyl vinyl ether copolymers, polychlorotrifluoroethylene, ethylene/tetrafluoroethylene copolymer, polyvinylidene fluoride and polyvinyl fluoride. It is preferable to use polytetrafluoroethylene therefor. Among these fluororesins, it is preferable to select those which have an average particle size of 5 to 20 µm and have been processed so as to facilitate the dispersion and prevent aggregation.

The fluororesin is employed in an amount of from 5 to 50 parts by weight, preferably from 10 to 30 parts by weight, per 100 parts by weight of the polyamide resin. When the content of the fluororesin is less than the lower limit as defined above, the oil resistance and slidability of the resin composition are deteriorated. When its content exceeds the upper limit, on the other hand, the fluororesin can be hardly dispersed uniformly in the resin composition and, as a result, the mechanical characteristics of the resin composition become irregular.

The carbon fiber to be used as the component (3) in the present invention involves both of those obtained by baking organic fibers and those purified from coal tar.

It is preferable that the carbon fiber employed in the present invention is one having an average fiber diameter of from 1 to 15 µm and having been uniformly cut into a length of not more than 3 mm uniformly.

The carbon fiber is employed in an amount of from 5 to 50 parts by weight, preferably from 10 to 30 parts by weight, per 100 parts by weight of the polyamide resin. When the content of the carbon fiber is less than the lower limit as defined above, the mechanical characteristics of the resin composition are deteriorated or the dimensional stability or slidability thereof can be scarcely improved. When its content exceeds the upper limit, on the other hand, the carbon fiber can be hardly dispersed uniformly in the resin composition and, as a result, the mechanical characteristics of the resin composition become irregular.

The shape of the fibrous Xonotlite to be used as the component (4) in the present invention is not particularly restricted, so long as it is a fibrous one. However, it is preferable that the average fiber diameter (D) of the fibrous Xonotlite is from 0.1 to 1 µm, the average fiber length (L) thereof is from 0.5 to 5 µm and the ratio L/D is from 5 to 20. A fibrous Xonotlite the D of which is less than 0.1 µm or the L of which is less than 0.5 µm generally costs a great deal for the production thereof, which results in an increase in the cost of the resin composition. When D exceeds 1 µm or L exceeds 5 µm, there arises a tendency toward the deterioration of the slidability of the resin composition. When L/D is smaller than 5, the strength and dimensional stability of the resin composition are deteriorated. When L/D exceeds 20, on the other hand, the anisotropy in the strength of the resin composition is elevated.

It is preferable that the fibrous Xonotlite to be used in the present invention has been surface-treated with a surface-active agent and/or a coupling agent so as to enhance its compatibility with the resin components or the dispersibility therein.

The fibrous Xonotlite is employed in an amount of from 5 to 50 parts by weight, preferably from 10 to 40 parts by weight and still preferably from 15 to 30 parts by weight, per 100 parts by weight of the polyamide resin. When the content of the fibrous Xonotlite is less than the lower limit as defined above, the slidability or dimensional stability of the resin composition can be scarcely improved. When its content exceeds the upper limit, on the other hand, the fibrous Xonotlite can be hardly dispersed uniformly in the resin composition and, as a result, the mechanical characteristics of the resin composition become irregular.

The composition of the present invention may further contain various additives commonly employed in the art, so long as the object of the present invention is not deteriorated thereby. Examples of the additives usable therein include UV absorbers, lubricants, mold release agents, heat stabilizers, antistatic agents, antioxidants and colorants including dyes and pigments.

The polyamide resin composition of the present invention can be produced by mixing the above components by a method publicly known per se. In a typical case, the above-mentioned components are fed into an extruding machine and kneaded while the resin components being in a molten state.

The polyamide resin composition obtained by the present invention has not only the good oil resistance etc. inherent to polyamide resins but also a high slidability and a high dimensional stability. Accordingly, the composition of the present invention is widely applicable as oil-resistant parts to various uses.

Examples of the oil-resistant parts include cylinder head covers, various oil reservoirs, crankcase covers, electromotive tool-related parts and hydraulic equipment parts.

The hydraulic equipment parts are employed as parts in the fields of automobiles and general-purpose instruments. In the automotive field, the polyamide resin composition of the present invention is usable in piston-related parts in hydraulic equipment parts such as clutches, brakes and power steering systems.

In the field of general-purpose instruments, it is usable in parts of vises and jacks.

It is preferable to use the polyamide resin composition of the present invention as hydraulic equipment parts in the fields of automobiles and general-purpose instruments, still preferably as automotive parts.

These parts can be easily produced by melt molding with the use of conventional extrusion molding machines or injection molding machines. For example, such a part can be obtained by molding pellets made of the polyamide resin composition of the present invention with a molding machine provided with a mold adequate for producing the desired part.

To further illustrate the present invention in greater detail, and not by way of limitation, the following Examples will be given.

The polyamide resin, fluororesin, carbon fiber, fibrous Xonotlite, glass fiber and wollastonite are marketed ones as specified below.
polyamide 66 (PA66; 2020B manufactured by Ube Industries, Ltd.);
polytetrafluoroethylene (PTFE; FLUON L169J manufactured by Asahi I.C.I. Fluoro Polymers Co., Ltd.);
carbon fiber (CF; TRO6NEB manufactured by Mitsubishi Rayon Co., Ltd.);
fibrous Xonotlite (ZL; ZONO·HIGE manufactured by Ube Material Industry, Ltd., D = 0.5 µm, L/D =10);
glass fiber (GC; ECS-03T-245 manufactured by Nippon Electric Glass Co., Ltd.);
wollastonite (WOL; Kemolit ABS-8 manufactured by Wolkem Private Limited).

The polyamide resin composition obtained by the present invention were evaluated by the following methods.
(i) Tensile strength and flexural strength of resin composition
   A test piece obtained by injection molding was subjected to measurement in accordance with ASTM D-638 and D-790.
(ii) Oil resistance of resin composition
   A test piece obtained by injection molding was soaked in engine oil in a sealed container made of stainless. Next, the stainless container was heated in an oil-bath maintained at 120 °C. After keeping at this temperature for 500 hours, the test piece was taken out and the tensile strength was measured 5 times in accordance with ASTM D-638. After calculating the average, the retention ratio thereof to the value of the untreated sample was determined. Thus the oil resistance was evaluated.
(iii) Frictional characteristics of resin composition
   By using a test piece obtained by injection molding, the frictional resistance (i.e., the rotary resistance at peripheral speed of 50 cm/sec, under load of 2.5 kg) was measured in accordance with Method A in JIS K7218. Based on the result, the slidability was evaluated. A smaller frictional resistance means the higher slidability.
(iv) Dimensional stability
   By using a test piece obtained by injection molding, the average coefficient of linear expansion at -30 to 120 °C was measured by thermal mechanical analysis (TMA). The data thus determined mean the ratio in dimensional changes depending on temperature. A smaller value indicates the higher dimensional stability.

### EXAMPLE 1

100 parts by weight of the polyamide resin (PA66), 15 parts by weight of the fluororesin (PTFE), 15 parts by weight of the carbon fiber (CF) and 30 parts by weight of the fibrous Xonotlite (ZL) were mixed together. The mixture thus obtained was processed into pellets for molding by using a twin-screw extrusion kneader (TEM 35 manufactured by Toshiba Machine Co., Ltd.) and a pelletizer at a cylinder temperature of 260 to 300 °C.

After drying in vacuo at 110 °C over day and night, these pellets were subjected to injection molding with a injection molding machine (SG 75-SYCAP manufactured by Sumitomo Heavy Industries, Ltd.) at a cylinder temperature of 260 to 300 °C and a mold temperature of 80 °C to thereby give a test piece. By using this test piece, a performance test was carried out. Table 1 shows the results.

In Example 2 and Comparative Examples 1 to 5, the compositions as specified in Table 1 were mixed and test pieces were prepared in accordance with the methods described in Example 1. By using the test pieces, various performance tests were carried out.

Table 1 also summarizes the results.

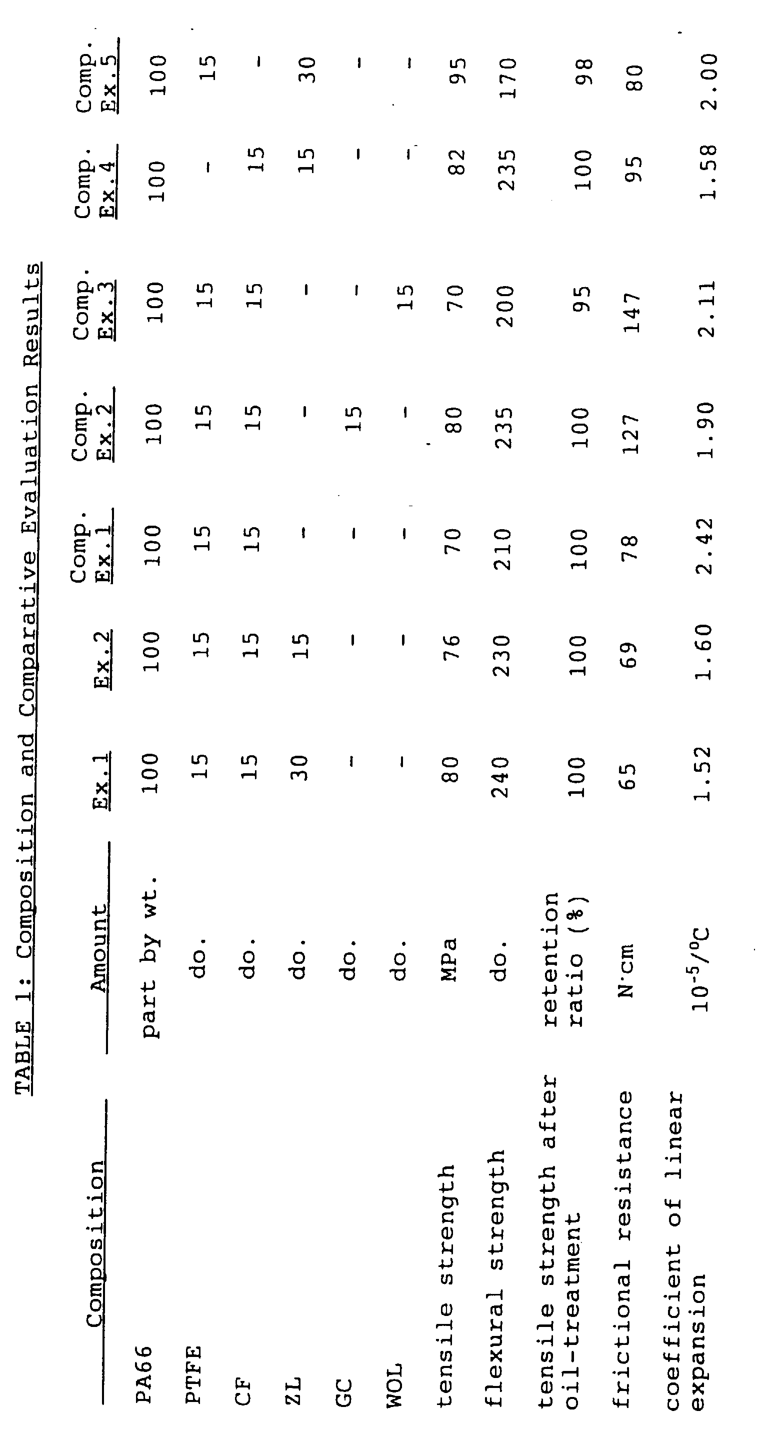

As the above description and Examples clearly show, the composition of the present invention is a material which is excellent in slidability and dimensional stability while sustaining the inherent mechanical characteristics and oil resistance of polyamide resins.

Molded articles made of the polyamide resin composition of the present invention are usable in various fields. Namely, they can be used in the fields of automobiles, etc. as hydraulic equipment parts which should be oil-resistant.

In the automotive field, in particular, these articles can be used as piston-related parts in hydraulic equipment parts such as clutches, brakes and power steering systems.

While the invention has been described in detail and with reference to specific examples thereof, it will be apparent to one skilled in the art that various changes and modifications can be made therein without departing from the spirit and scope thereof.

## Claims

1. A polyamide resin composition which comprises:
(1) 100 parts by weight of a polyamide resin;
(2) from 5 to 50 parts by weight of a fluororesin;
(3) from 5 to 50 parts by weight of a carbon fiber; and
(4) from 5 to 50 parts by weight of a fibrous Xonotlite.

2. A polyamide resin composition as claimed in Claim 1, wherein said fibrous Xonotlite is one;
(a) having an average fiber diameter (D) of from 0.1 to 1 µm;
(b) having an average fiber length (L) of from 0.5 to 5 µm; and
(c) having a ratio L/D of from 5 to 20.

3. A polyamide resin composition as claimed in Claim -1 which is one obtained by melt molding.

4. An oil-resistant part made of a polyamide resin composition as claimed in Claim 1.

5. An oil-resistant part as claimed in Claim 4 which is a hydraulic equipment part.

6. A hydraulic equipment part as claimed in Claim 5 which is an automotive part.
